# EUROPÄISCHE PATENTSCHRIFT

(11) **EP 4 189 348 B1**
(45) Veröffentlichungstag und Bekanntmachung des Hinweises auf die Patenterteilung: **29.10.2025**
(21) Anmeldenummer: 21740067.0
(22) Anmeldetag: 08.07.2021
(51) Int. Cl.: G01K 7/22, G01K 1/02, F24C 7/08

(54) **TEMPERATURMESSVORRICHTUNG MIT KERNTEMPERATURFÜHLER**
TEMPERATURE MEASURING DEVICE WITH CORE TEMPERATURE SENSOR
DISPOSITIF DE MESURE DE TEMPÉRATURE À CAPTEUR DE TEMPÉRATURE INTERNE

(30) Priorität: 29.07.2020 EP 20382683
(43) Veröffentlichungstag der Anmeldung: 07.06.2023
(73) Patentinhaber: BSH Hausgeräte GmbH, 81739 München (DE)
(72) Erfinder: DELGADO CABEZAS, Jesus Maria, 50018 Zaragoza (ES); HERNANDEZ LOPEZ, Francisco, 50015 Zaragoza (ES); LORENZO ASENSIO, Ana, 50016 Zaragoza (ES); OBON ABADIA, Carlos, 50016 Santa Isabel (Zaragoza) (ES); SANROMAN HERNANDEZ, Luis, 50003 Zaragoza (ES)
(86) Internationale Anmeldenummer: PCT/EP2021/068967
(87) Internationale Veröffentlichungsnummer: WO 2022/022971

(56) Entgegenhaltungen:
- US-A- 3 316 765
- US-A- 4 484 050
- US-A1- 2008 043 809

## Beschreibung

Die Erfindung betrifft einen Kerntemperaturfühler, aufweisend ein längliches Messrohr mit mehreren NTC-Widerständen. Die Erfindung betrifft auch eine Temperaturmessvorrichtung, aufweisend einen solchen Kerntemperaturfühler sowie eine Datenverarbeitungsvorrichtung, wobei die Datenverarbeitungseinrichtung dazu eingerichtet ist, Widerstandswerte mindestens eines NTC-Widerstands zu messen und aus den Widerstandswerten und einer zugehörigen R/T-Charakteristik jeweilige Temperaturwerte zu bestimmen. Die Erfindung betrifft ferner ein Gargerät, aufweisend eine Steuereinrichtung zur Steuerung eines Garbetriebs des Gargeräts, wobei das Gargerät mit einer Temperaturmessvorrichtung koppelbar ist und die Steuereinrichtung dazu eingerichtet ist, zur Steuerung des Garbetriebs Temperaturwerte von der Temperaturmessvorrichtung zu empfangen. Die Erfindung betrifft zudem einen Satz von Vorrichtungen, umfassend eine Temperaturmessvorrichtung und ferner mindestens ein Gargerät mit einem Garraum, an welches die Temperaturmessvorrichtung anschließbar ist. Die Erfindung betrifft außerdem ein Verfahren zum Betreiben eines Gargeräts mit daran angeschlossener Temperaturmessvorrichtung, bei dem die Temperaturmessvorrichtung jeweilige Temperaturwerte bestimmt und diese Temperaturwerte an das Gargerät übermittelt. Die Erfindung ist insbesondere vorteilhaft anwendbar auf Haushalts-Gargeräte, insbesondere Backöfen und Gargeräte mit heizbarer Unterlage wie Grills, heiße Steine usw.

Kerntemperaturfühler der betreffenden Art zum Einstecken in Gargut, um eine innere Temperatur des Garguts zu messen, sind hinlänglich bekannt. Dabei werden als Temperatursensoren häufig NTC-Widerstände (Heißleiter) eingesetzt, die in dem Messrohr untergebracht sind. Das Messrohr ist zum einfachen Einstecken in das Gargut in der Regel lanzenförmig ausgebildet. Auch bekannt sind Kerntemperaturfühler mit mehreren entlang des Messrohrs verteilt angeordneten gleichen NTC-Widerständen, sog. "Mehrpunkt-Kerntemperaturfühler". Mehrpunkt-Kerntemperaturfühler ermöglichen eine Temperaturmessung an unterschiedlichen Stellen entlang des Messrohrs.

DE 10 2006 024 130 A1 offenbart einen in einem Back-/Garraum frei positionierbaren und/oder in einem Back-/Gargut mindestens teilweise einsteckbaren Garprozessfühler. Dieser weist zwischen einem Griff und einem näher beim Griff des Garprozessfühlers vorgesehenen Temperatursensor von mindestens zwei Temperatursensoren zum Erfassen der Kerntemperatur an einem Einstich-Messrohr des Garprozessfühlers einen Anschlag auf, der fest mit dem Einstich-Messrohr verbunden ist und vorzugsweise mit dem Einstich-Messrohr des Garprozessfühlers eine Einheit bildet. Vorzugsweise ist der Anschlag als dünner flächenförmiger Körper ausgebildet. Zwischen dem Anschlag und dem Griff des Garprozessfühlers ist mindestens ein im und/oder auf dem Einstich-Messrohr positionierter Temperatursensor vorgesehen, der die Temperatur der Luftströmung in unmittelbarer Nähe zum Back-/Gargut misst.

DE 10 2009 019 613 A1 offenbart eine Temperaturmesseinrichtung für ein Gargut, insbesondere für Fleisch, mit einem lang gestreckten, insbesondere lanzenähnlichen, Temperaturfühler zum Einstecken in das Gargut, wobei an einem freien Endbereich des Temperaturfühlers ein erster Temperatursensor angeordnet ist, mittels welchem eine Gargutinnentemperatur erfassbar ist, und wobei an einem dem freien Endbereich abgewandten Endbereich des Temperaturfühlers ein zweiter Temperatursensor angeordnet ist, mittels welchem eine Umgebungstemperatur messbar ist. US 2008043809 A1 offenbart eine Einstechsonde zur Messung der Kerntemperatur von Lebensmitteln beim Backen oder Grillen.

Jedoch ist es nachteilig, dass sich für NTC-Widerstände aufgrund ihrer logarithmischen R/T-Charakteristik eine hohe Messgenauigkeit und eine hohe Messauflösung für viele praktische Anwendungen nur in einem vergleichsweisen schmalen Temperaturbereich ergibt. Sollen daher mit einem NTC-Widerstand merklich unterschiedliche Temperaturen gemessen werden, muss eine vergleichsweise geringe Messgenauigkeit über diesen Bereich in Kauf genommen werden. Eine Möglichkeit, mit einem temperaturabhängigen Widerstand eine hohe Messgenauigkeit über einen breiteren Temperaturbereich zu erlangen, besteht darin, PTC-Widerstände (Kaltleiter) zu nutzen, welche eine linearere R/T-Charakteristik aufweisen als NTC-Widerstände. Jedoch sind PTC-Widerstände erheblich teurer als NTC-Widerstände.

Es ist die **Aufgabe** der vorliegenden Erfindung, die Nachteile des Standes der Technik zumindest teilweise zu überwinden und insbesondere eine preiswerte Möglichkeit zur Messung einer Temperatur mittels eines Kerntemperaturfühlers bereitzustellen, die auch für weiter auseinanderliegende Temperaturen jeweils hohe Messgenauigkeiten und Messauflösungen ergibt.

Diese Aufgabe wird gemäß den Merkmalen des unabhängigen Anspruchs 1 gelöst. Vorteilhafte Ausführungsformen sind Gegenstand der abhängigen Ansprüche, der Beschreibung und der Zeichnungen.

Die Aufgabe wird gelöst durch eine Temperaturmessvorrichtung, wie im Anspruch 1 definiert wird.

Dadurch wird der Vorteil erreicht, dass unterschiedliche, auch weit auseinanderliegende Temperaturbereiche mit hoher Messgenauigkeit und Messauflösung abfühlbar sind, da zur Temperaturbestimmung diejenigen NTC-Widerstände genutzt bzw. ausgewertet werden, die für den abzufühlenden Temperaturbereich die höchste Messgenauigkeit bzw. die beste Kombination aus hoher Messgenauigkeit und hoher Messauflösung bereitstellen. Dabei ist der Kerntemperaturfühler immer noch kostengünstig umsetzbar, da NTC-Widerstände preiswert verfügbar sind.

Ein weiterer Vorteil besteht darin, dass der Kerntemperaturfühler dadurch auch für andere Anwendungsbereiche als die Kerntemperaturabfühlung einsetzbar ist, deren Temperaturbereiche sich stark von dem zur Kerntemperaturabfühlung üblichen abzufühlenden Temperaturbereich (typischerweise 70 °C bis 100 °C) unterscheiden. Der Kerntemperaturfühler kann dann auch als Kombinations-Kerntemperaturfühler bezeichnet werden.

Der für einen bestimmten abzufühlenden Temperaturbereich ausgewählte NTC-Widerstand entspricht insbesondere demjenigen NTC-Widerstand, der in diesem Temperaturbereich eine besonders hohe / höchste Messgenauigkeit oder besonders günstigen Kompromiss zwischen Messgenauigkeit und Messauflösung aufweist. Umgekehrt kann einem NTC-Widerstand ein Temperaturbereich zugeordnet sein, innerhalb dessen dieser NTC-Widerstand (und kein anderer NTC-Widerstand mit anderer R/T-Charakteristik) zur Temperaturbestimmung abgefühlt wird. Dieser Temperaturbereich wird im Folgenden auch als "Vorzugs-Temperaturbereich" bezeichnet. Der Vorzugs-Temperaturbereich kann z.B. während einer Auslegung des Kerntemperaturfühlers oder eines damit verbundenen Gargeräts festgelegt werden.

NTC-Widerstände mit unterschiedlichen R/T-Charakteristiken weisen also unterschiedliche Vorzugs-Temperaturbereiche auf. Unterschiedliche Vorzugs-Temperaturbereiche können ineinander übergehen oder voneinander beabstandet sein, überlappen sich jedoch insbesondere nicht, um eine Eindeutigkeit bei der Auswahl der NTC-Widerstände bzw. R/T-Charakteristiken zu erreichen.

Erfindungsgemäß weist die Temperaturmessvorrichtung mindestens zwei NTC-Widerstände auf, die zueinander unterschiedlichen R/T-Charakteristiken aufweisen, also unterschiedliche temperaturabhängige Widerstandswerte R (auch als R(T) oder R_{T} bezeichnet) für bestimmte Temperaturen T aufweisen. Die R/T-Charakteristiken lassen sich als R/T-Kurven (auch als R/T-Kennlinien bezeichnet) darstellen oder aus der Steinhart-Hart-Gleichung oder der Beta-Gleichung berechnen und sind widerstandsspezifisch. Der Kerntemperaturfühler kann also z.B. mindestens zwei NTC-Widerstände mit unterschiedlichen R/T-Kurven aufweist.

Es ist eine Weiterbildung, dass der Kerntemperaturfühler an einem Endbereich des Messrohrs einen Griff aufweist. Dies erleichtert eine Handhabung. Es ist eine Weiterbildung, dass der Griff seitlich über das Messrohr herausragt, was den Vorteil ergibt, dass der Griff auch als mechanischer Anschlag dienen kann. Es ist zudem thermisch besonders günstig, wenn elektrische oder elektronische Bauteile außer den NTC-Widerständen, falls vorhanden, im Bereich des Griffs untergebracht sind. An seinem anderen, freien Endbereich läuft das Messrohr vorteilhafterweise spitz zu, was ein Einstecken in Gargut erleichtert.

Es ist eine Weiterbildung, dass der Kerntemperaturfühler zum drahtgebundenen oder drahtlosen Kommunikation mit einem Gargerät eingerichtet ist. Dadurch kann das Gargerät von dem Kerntemperaturfühler abgefühlte Temperaturwerte empfangen und zur Steuerung des Gargeräts nutzen. In einer drahtgebundenen Weiterbildung weist der Kerntemperaturfühler einen Draht oder ein Kabel auf, mittels dessen er an ein Gargerät anschließbar ist. Die Verbindung über elektrische Leitungen weist die Vorteile einer besonders einfachen Verbindung, einer hohen Störunanfälligkeit und der Möglichkeit, den Kerntemperaturfühler über die elektrischen Leitungen mit elektrischer Energie zu versorgen, auf. Alternativ oder zusätzlich kann der Kerntemperaturfühler mit einer drahtlosen Kommunikationseinrichtung (z.B. einem Bluetooth-Modul) ausgerüstet sein, die dazu eingerichtet ist mit einer entsprechenden Kommunikationseinrichtung des Gargeräts zu kommunizieren.

Es ist eine Weiterbildung, dass der Kerntemperaturfühler genau zwei NTC-Widerstände mit zueinander unterschiedlichen R/T-Charakteristiken aufweist. Dies ist besonders preiswert umsetzbar.

Es ist eine Weiterbildung, dass der Kerntemperaturfühler mindestens eine Gruppe mit jeweils mehreren NTC-Widerständen mit pro Gruppe gleicher R/T-Charakteristik aufweist, insbesondere mehrere gleiche NTC-Widerstände. So wird der Vorteil erreicht, dass mittels der einer Gruppe zugehörigen NTC-Widerstände eine ortsaufgelöste Temperaturmessung durchführbar ist. Der Kerntemperaturfühler kann dann zumindest für den dieser Gruppe zugehörigen Vorzugs-Temperaturbereich als Mehrpunkt-Kerntemperaturfühler eingesetzt werden. Die mehreren NTC-Widerstände einer Gruppe können entlang des Messrohrs verteilt angeordnet sein.

Es ist eine Ausgestaltung, dass der Kerntemperaturfühler mindestens eine Gruppe mit jeweils mehreren NTC-Widerständen mit pro Gruppe gleicher R/T-Charakteristik sowie einen NTC-Widerstand mit dazu unterschiedlicher R/T-Charakteristik aufweist. So wird im Vergleich zu der obigen Weiterbildung der weitere Vorteil erreicht, dass zusätzlich eine nicht-ortsaufgelöste Temperaturmessung mit hoher Messgenauigkeit und Messauflösung für den dem einzelnen NTC-Widerstand zugeordneten Vorzugs-Temperaturbereich durchführbar ist.

Es ist eine Ausgestaltung, dass der Kerntemperaturfühler mindestens zwei Gruppen mit jeweils mehreren NTC-Widerständen gleicher R/T-Charakteristik pro Gruppe aufweist. So wird der Vorteil erreicht, dass ortsaufgelöste Temperaturmessungen für mehrere zu den jeweiligen Gruppen zugehörigen Vorzugs-Temperaturbereiche durchführbar ist.

Es ist eine Weiterbildung, dass der Kerntemperaturfühler NTC-Widerstände mit mehr als zwei zueinander unterschiedlichen R/T-Charakteristiken aufweist. Je mehr NTC-Widerstände unterschiedliche R/T-Charakteristiken aufweisen, desto mehr Vorzugs-Temperaturbereiche lassen sich bereitstellen und mit hoher Messgenauigkeit abfühlen.. Dies wiederum erweitert vorteilhafterweise das mögliche Mess- und Anwendungsspektrum des Kerntemperaturfühlers.

Es ist eine Ausgestaltung, dass mindestens ein NTC-Widerstand mit einer "ersten" R/T-Charakteristik zum Abfühlen von Temperaturen zwischen 70 °C und 100 °C vorgesehen ist (also dort seinen Vorzugs-Temperaturbereich aufweist). Dieser Temperaturbereich ist besonders vorteilhaft zur Messung einer Kerntemperatur von Gargut, z.B. von Fleisch. Es ist eine Weiterbildung, dass mehrere solche NTC-Widerstände vorhanden sind, so dass eine ortsaufgelöste Temperaturmessung innerhalb des Garguts ermöglicht wird und dadurch z.B. eine besonders genaue Bestimmung einer Kerntemperatur ermöglicht wird.

Es ist eine Ausgestaltung, dass mindestens ein anderer NTC-Widerstand mit einer anderen ("zweiten") R/T-Charakteristik zum Abfühlen von Temperaturen über 150 °C, insbesondere über 180 °C, vorgesehen ist. Dies ergibt den Vorteil, dass der Kerntemperaturfühler auch als Temperaturfühler zur genauen Erfassung hoher Temperaturen einsetzbar ist. Solche Temperaturen können z.B. Betriebstemperaturen eines Gargeräts sein, beispielsweise eine Garraumtemperatur eines Ofens, eine Temperatur eines Garzubehörs (z.B. eines heizbaren Garraumteilers) und/oder eine Temperatur einer heizbaren Garunterlage wie eines Pizzasteins, eines Brotbacksteins, eines heißen Steins, einer Grillplatte, einer Plancha, eines Teppanyaki, usw.

Es ist eine insbesondere für abzufühlende Temperaturbereiche über 150 °C vorteilhafte Ausgestaltung, dass mindestens ein dort seinen Vorzugs-Temperaturbereich aufweisender NTC-Widerstand ein glasgekapselter NTC-Widerstand ist. So wird vorteilhafterweise ein auch bei so hohen Temperaturen eine hohe Messgenauigkeit mit preiswerten Mitteln ermöglicht.

Die Aufgabe wird erfindungsgemäß gelöst durch eine Temperaturmessvorrichtung, aufweisend einen Kerntemperaturfühler wie oben beschrieben sowie eine Datenverarbeitungsvorrichtung, wobei mittels der Datenverarbeitungsvorrichtung die unterschiedlichen R/T-Charakteristiken der Temperatursensoren des Kerntemperaturfühlers abrufbar sind und die Temperaturmessvorrichtung, insbesondere Datenverarbeitungsvorrichtung, dazu eingerichtet ist,
- eine R/T-Charakteristik abhängig von einem vorgegebenen Temperatur-Sollwert auszuwählen,
- Widerstandswerte mindestens eines zu der ausgewählten R/T-Charakteristik gehörigen NTC-Widerstands zu messen und
- aus den Widerstandswerten und der zugehörigen ausgewählten R/T-Charakteristik jeweilige Temperaturwerte zu bestimmen.

Die Temperaturmessvorrichtung kann analog zu dem Kerntemperaturfühler ausgebildet werden, und umgekehrt, und weist die gleichen Vorteile auf.

Die Datenverarbeitungsvorrichtung kann in den Kerntemperaturfühler integriert sein, z.B. in Form eines in dem Kerntemperaturfühler - insbesondere in dessen Griff - untergebrachten Mikroprozessors, ASICs oder FPGAs. Ist die Datenverarbeitungsvorrichtung in den Kerntemperaturfühler integriert, können die Ausdrücke Temperaturmessvorrichtung und Kerntemperaturfühler synonym verwendet werden. Die Datenverarbeitungsvorrichtung kann aber auch eine von dem Kerntemperaturfühler separate Vorrichtung sein, z.B. als eine in ein Gargerät, das mit dem Kerntemperaturfühler datentechnisch koppelbar ist, integrierte Vorrichtung.

Dass die unterschiedlichen R/T-Charakteristiken abrufbar sind, kann umfassen, dass diese der Datenverarbeitungsvorrichtung zur Verfügung stehen und von der Datenverarbeitungsvorrichtung zur Umrechnung genutzt werden. Dazu können die R/T-Charakteristiken in einem Datenspeicher der Datenverarbeitungsvorrichtung oder in einem mit der Datenverarbeitungsvorrichtung datentechnisch verbunden Datenspeicher vorgehalten sein. Zum Beispiel können in dem Datenspeicher verschiedene R/T-Kurven als Kennlinien (z.B. in Form einer Nachschlagetabellen) gespeichert sein und/oder es können entsprechende materialspezifische Steinhart-Hart-Koeffizienten (häufig mit a₀, a₁ und a₃ bezeichnet) oder materialspezifische Koeffizienten der Beta-Gleichung (z.B. eine Materialkonstante B oder β und ein Nennwiderstand) für unterschiedliche NTC-Widerstände gespeichert sein.

Dass die Temperaturmessvorrichtung, insbesondere Datenverarbeitungseinrichtung, dazu eingerichtet ist, eine bestimmte R/T-Charakteristik abhängig von einem vorgegebenen Temperatur-Sollwert auszuwählen, umfasst insbesondere, dass die Temperaturmessvorrichtung - beispielsweise von einem damit datentechnisch gekoppelten Gargerät - einen Temperatur-Sollwert empfängt und die für diesen Temperatur-Sollwert am besten geeignete R/T-Charakteristik bzw. den zugehörigen mindestens einen NTC-Widerstand auswählt. Die Auswahl kann beispielsweise so durchgeführt werden, dass die Datenverarbeitungseinrichtung überprüft, ob der Temperatur-Sollwert in einen bestimmten Vorzugs-Temperaturbereich fällt, und falls dies der Fall ist, die zu diesem Vorzugs-Temperaturbereich gehörige R/T-Charakteristik auswählt. In einer Variante kann dann, wenn der Temperatur-Sollwert nicht in einen Vorzugs-Temperaturbereich fällt, anhand eines vorgegebenen Kriteriums eine bestimmte R/T-Charakteristik ausgewählt werden, z.B. eine R/T-Charakteristik, deren Vorzugsbereich am nächsten an dem Temperatur-Sollwert liegt.

Dass die Temperaturmessvorrichtung, insbesondere Datenverarbeitungseinrichtung, dazu eingerichtet ist, Widerstandswerte mindestens eines zu der ausgewählten R/T-Charakteristik gehörigen NTC-Widerstands zu messen, umfasst insbesondere, dass gezielt, insbesondere nur, Widerstandswerte von NTC-Widerstandswerten gemessen werden, welche die ausgewählte R/T-Charakteristik aufweisen. Die Widerstandswerte anderer NTC-Widerstände werden entweder ignoriert oder gar nicht erst gemessen. Der letztere Fall kann beispielsweise so umgesetzt sein, dass eine Messaufnehmerschaltung (z.B. umfassend einen A/D-Wandler) individuell an jeweils einen der NTC-Widerstände anschließbar ist, aber nur an solche NTC-Widerstände angeschlossen wird, welche die ausgewählte R/T-Charakteristik aufweisen.

Dass die Temperaturmessvorrichtung, insbesondere Datenverarbeitungseinrichtung, dazu eingerichtet ist, aus den Widerstandswerten und der zugehörigen ausgewählten R/T-Charakteristik jeweilige Temperaturwerte zu bestimmen, umfasst insbesondere, dass die Widerstandswerte des mindestens einen die ausgewählte R/T-Charakteristik aufweisenden NTC-Widerstands gemessen und als Eingangsgrößen zur Bestimmung der Temperatur verwendet werden, und zwar auf Basis der ausgewählten R/T-Charakteristik, z.B. durch einen Abgleich einer R/T-Kennlinie oder formelmäßig anhand der Steinhart-Hart-Gleichung oder der Beta-Gleichung. Die Temperaturwerte können dann zur Steuerung eines Gargeräts verwendet werden, z.B. um eine Aktion auszulösen, wenn eine Soll-Kerntemperatur erreicht wird, oder um eine Betriebstemperatur einzustellen oder zu regeln.

Es ist eine Ausgestaltung, dass der Temperatur-Sollwert von einem mit der Temperaturmessvorrichtung (falls die Datenverarbeitungseinrichtung in das Gargerät integriert ist, nur mit dem Kerntemperaturfühler,) datentechnisch verbundenen Gargerät vorgegeben wird bzw. vorgebbar ist.

Es ist eine Weiterbildung, dass der Temperatur-Sollwert von dem Gargerät automatisch vorgebbar ist, z.B. auch aus einem automatisch ablaufenden Garprogramm oder Rezept heraus.

Es ist eine Weiterbildung, dass der Temperatur-Sollwertwert einem nutzerseitig an dem Gargerät einstellbaren Temperatur-Sollwertwert entspricht. Dabei kann der nutzerseitig einstellbare Temperatur-Sollwertwert bereits dem an die Temperaturmessvorrichtung, insbesondere Datenverarbeitungseinrichtung, übermitteltem Wert entsprechen (z.B. "90 °C" oder "200 °C") oder kann durch das Gargerät in einen entsprechenden Temperatur-Sollwertwert umgesetzt werden (z.B. eine Einstellung "medium" in einen Temperatur-Sollwertwert 90 °C und eine Einstellung "durch" in einen Temperatur-Sollwertwert 100 °C, usw. oder eine Einstellung "mittelheiß" in einen Temperatur-Sollwertwert 200 °C, eine Einstellung "sehr heiß" in einen Temperatur-Sollwertwert 250 °C, oder eine bestimmte Temperatur- oder Garstufe (z.B. aus einem Bereich "1" bis "9" in entsprechend gestaffelte Temperatur-Sollwertwerte zwischen 150 °C und 250 °C usw.).

Auch ist es eine Weiterbildung, dass eine nutzerseitig eingestellte oder programmgesteuert eingestellte Anwendung von dem Gargerät in einen Temperatur-Sollwertwert umgesetzt wird, z.B. eine Einstellung eines Garbetrieb unter Nutzung einer Kerntemperaturfunktion in einen Temperatur-Sollwertwert innerhalb des dazu am besten geeigneten Vorzugs-Temperaturbereichs zwischen 70 °C und 100 °C.

Auch ist es möglich, dass kein Temperatur-Sollwertwert als solcher an die Temperaturmessvorrichtung übermittelt wird, sondern "indirekt" eine Information über die vorgesehene Funktion des Kerntemperaturfühlers. So kann das Gargerät zur Nutzung einer Kerntemperaturfunktion einen Code (z.B. "0") an die Temperaturmessvorrichtung übermittelten, welche anhand dieses Codes die zur Messung der Kerntemperatur vorgesehene R/T-Charakteristik auswählt. Soll der Kerntemperaturfühler hingegen z.B. zur Messung einer Betriebstemperatur eines Grills o.ä. verwendet werden, wird ein anderer Code (z.B. "1") an die Temperaturmessvorrichtung übermittelt, welche anhand dieses Codes eine andere, für höhere Temperaturen vorgesehene R/T-Charakteristik auswählt.

Die Aufgabe wird auch gelöst durch ein Gargerät, aufweisend eine Steuereinrichtung zur Steuerung eines Garbetriebs des Gargeräts, wobei das Gargerät eine Temperaturmessvorrichtung wie oben beschrieben aufweist und dazu eingerichtet ist, einen Temperatur-Sollwert auf die Temperaturmessvorrichtung zu übertragen, und wobei die Steuereinrichtung dazu eingerichtet ist, zur Steuerung des Garbetriebs Temperaturwerte von der Temperaturmessvorrichtung zu empfangen.

Das Gargerät kann analog zu der Temperaturmessvorrichtung und/oder dem Kerntemperaturfühler ausgebildet werden, und umgekehrt, und weist die gleichen Vorteile auf.

Das Gargerät ist vorteilhafterweise ein Haushalts-Gargerät. Es ist eine Weiterbildung, dass das Gargerät einen Garraum aufweist, z.B. ein Backofen und/oder ein Dampfgargerät ist. Es ist eine Weiterbildung, dass das Gargerät eine heizbare Garunterlage aufweist oder ist, z.B. ein Pizzastein, ein Brotbackstein, ein "heißer Stein", eine Grillplatte, eine Plancha, ein Teppanyaki, usw.

Der Temperatur-Sollwert kann z.B. eine Gargut-Kerntemperatur oder eine Betriebstemperatur des Gargeräts, z.B. der heizbaren Garunterlage, sein.

Der Temperatur-Sollwert kann über eine nutzerseitig bedienbare Bedienvorrichtung wie ein Drehknebel, Knopf, Touch-Display usw. einstellbar sein. Die Einstellvorrichtung kann aber z.B. auch der Steuereinrichtung des Gargeräts entsprechen, welche den Temperatur-Sollwert z.B. beruhend auf einer Nutzereingabe oder einem Garprogramm einstellt. Das Steuerung des Garbetriebs kann einen Vergleich der von der Temperaturmessvorrichtung empfangenen Temperaturwerte mit dem Temperatur-Sollwert oder einem davon abgeleiteten Wert umfassen, beispielsweise zum Zweck einer Regelung einer Betriebstemperatur oder zum Überwachen auf ein Erreichen einer Kerntemperatur, usw.

Die Aufgabe wird ferner gelöst durch einen Satz von Vorrichtungen, umfassend eine Temperaturmessvorrichtung mit Kerntemperaturfühler wie oben beschrieben und ferner mindestens ein Gargerät wie oben beschrieben mit einem Garraum (z.B. einen Backofen) sowie ein Gargerät wie oben beschrieben mit einer heizbaren Garunterlage (z.B. einen Grill) , die eine Aufnahme für das Messrohr des Kerntemperaturfühlers aufweist, wobei die Gargeräte zur Kopplung mit der gleichen Temperaturmessvorrichtung ausgebildet sind, wobei das Gargerät mit dem Garraum dazu eingerichtet ist, von dem Kerntemperaturfühler empfangene Temperaturwerte zur Überwachung einer Kerntemperatur von Gargut zu nutzen und wobei das Gargerät mit der heizbaren Garunterlage dazu eingerichtet ist, von dem Kerntemperaturfühler empfangene Temperaturwerte zur Regelung einer Betriebstemperatur der heizbaren Garunterlage zu nutzen.

Die Aufgabe wird auch gelöst durch ein Verfahren zum Betreiben eines Gargeräts wie oben beschrieben, bei dem
- von dem Gargerät ein Temperatur-Sollwert an die Temperaturmessvorrichtung, insbesondere deren Datenverarbeitungseinrichtung, übermittelt wird und die Temperaturmessvorrichtung, insbesondere deren Datenverarbeitungseinrichtung
- anhand des Temperatur-Sollwerts eine zugehörige R/T-Charakteristik auswählt,
- Messwerte mindestens eines zu der ausgewählten R/T-Charakteristik gehörigen NTC-Widerstands abfühlt,
- aus diesen Messwerte anhand der zugehörigen R/T-Charakteristik jeweilige Temperaturwerte bestimmt und
- diese Temperaturwerte an das Gargerät übermittelt.

Das Verfahren kann analog zu den Vorrichtungen ausgebildet werden, und umgekehrt, und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines erfindungsgemäßen Kerntemperaturfühlers;
- Fig.2: zeigt eine Skizze einer Messaufnehmerschaltung und eines Mikroprozessors des erfindungsgemäßen Kerntemperaturfühlers;
- Fig.3: zeigt einen Satz mit zwei Gargeräten und dem erfindungsgemäßen Kerntemperaturfühler; und
- Fig.4: zeigt einen möglichen erfindungsgemäßen Verfahrensablauf zum Betreiben des Kerntemperaturfühlers.

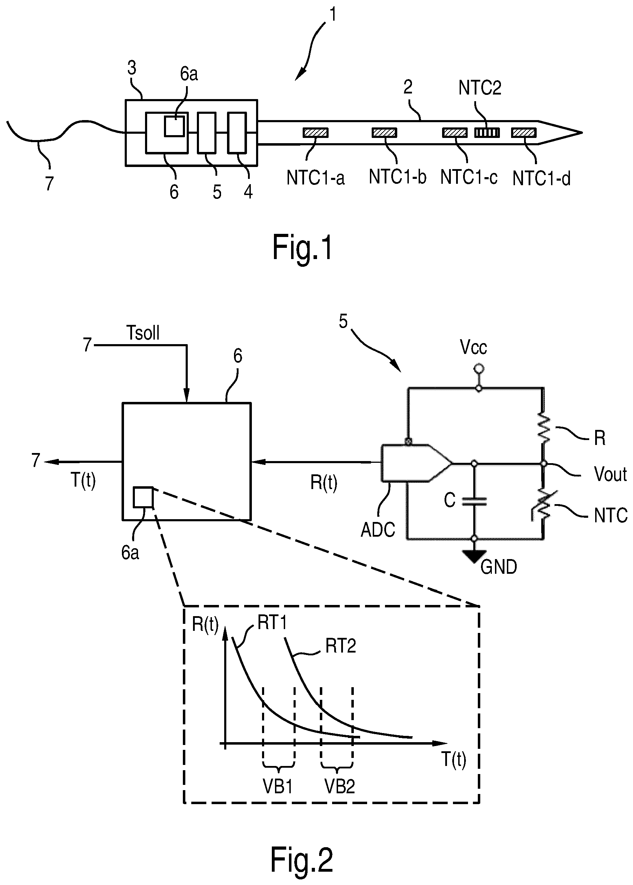

**Fig.1** zeigt als Schnittdarstellung in Seitenansicht eine Skizze eines erfindungsgemäßen Mehrpunkt-Kerntemperaturfühlers 1 mit einem lanzenförmigen Messrohr 2, dessen vorderer, freier Endbereich spitz zuläuft und an dessen anderem, hinterem Endbereich sich ein seitlich über das Messrohr 2 hinausstehender Griff 3 befindet. In dem Messrohr 2 sind NTC-Widerstände NTC1a, NTC1b, NTC1c, NTC1d, NTC2 untergebracht. Die NTC-Widerstände NTC1a bis NTC1d und NTC2 sind über elektrische Leitungen (o. Abb.) mit eines Auswahlschaltung 4 verbunden, welche mit einer Messaufnehmerschaltung 5 verbunden ist, die mit wiederum einer Datenverarbeitungseinrichtung in Form z.B. eines Mikroprozessors 6 verbunden ist. Die Auswahlschaltung 4, die Messaufnehmerschaltung 5 und der Mikroprozessor 6 sind hier in dem Griff 3 untergebracht.

Die Auswahlschaltung 4 ist von dem Mikroprozessor 6 dazu ansteuerbar, einen bestimmten der NTC-Widerstände NTC1a bis NTC1d, NTC2 mit der Messaufnehmerschaltung 5 zu verbinden. Die Messaufnehmerschaltung 5 dient dazu, einen aktuellen Widerstandswert R(t) des damit verbundenen NTC-Widerstands NTC bzw. NTC1a bis NTC1d, NTC2 zu bestimmen und als digitalisierten Widerstandswert R(t) dem Mikroprozessor 6 zur Verfügung zu stellen.

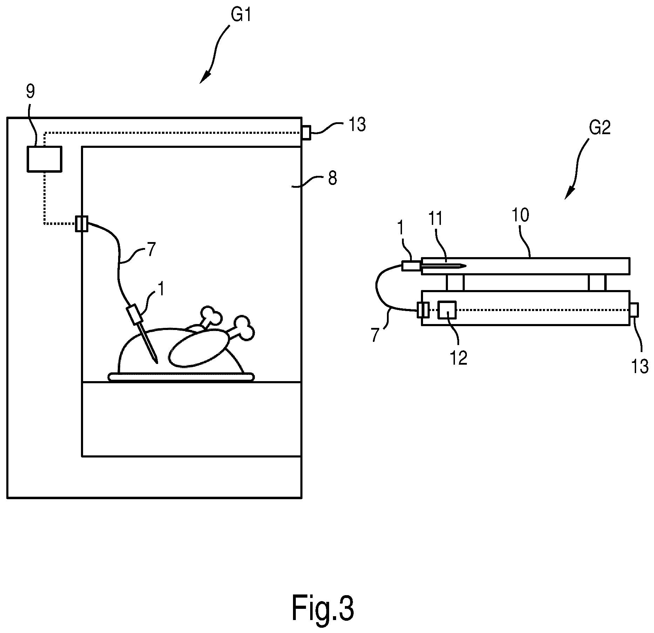

Der Mikroprozessor 6 errechnet aus dem digitalisierten Widerstandswert R(t) eine aktuelle Temperaturwerte T(t) und kann sie an ein Gargerät G1 oder G2 (siehe Fig.3) übermitteln, z.B. drahtlos oder - wie gezeigt - drahtgebunden über ein Kabel 7.

Da der Mikroprozessor 6 in den Kerntemperaturfühler 1 integriert ist und der Kerntemperaturfühler 1 somit aktuell gemessene Temperaturwerte T(t) ausgibt, entspricht der Kerntemperaturfühler 1 einer Temperaturmessvorrichtung.

**Fig.2** zeigt eine Skizze der Messaufnehmerschaltung 5 und des Mikroprozessors 6 des Kerntemperaturfühlers 1.

Über das Kabel 7 erhält der Mikroprozessor 6 von einem damit zumindest datentechnisch (und ggf. auch zur Stromversorgung des Kerntemperaturfühlers 1) verbundenen Gargerät G1, G2 einen Temperatur-Sollwert Tsoll. Folgend wird eine diesem Temperatur-Sollwert Tsoll zugeordnete R/T-Kurve RT1 oder RT2 bzw. mindestens ein entsprechender NTC-Widerstand NTC1a bis NTC1d oder NTC2 beruhend auf mindestens einem vorgegebenen Kriterium ausgewählt. Dazu weist der Mikroprozessor 6 einen Datenspeicher 6a, in dem die R/T-Kurven RT1, RT2 (z.B. in einer Nachschlage-Tabelle) gespeichert sind, auf oder ist damit gekoppelt.

Den R/T-Kurven RT1 und RT2 bzw. den entsprechenden NTC-Widerstand NTC1a bis NTC1d oder NTC2 können in einer Variante jeweils Vorzugs-Temperaturbereiche VB1 bzw. VB2 zugeordnet sein. Fällt der Temperatur-Sollwert Tsoll in einen der Vorzugs-Temperaturbereiche VB1 bzw. VB2, wird die zugehörige R/T-Kurve RT1 oder RT2 ausgewählt. Die Vorzugs-Temperaturbereiche VB1 und VB2 sind hier voneinander beabstandet eingezeichnet, können alternativ aber auch aneinander angrenzen bzw. ineinander übergehen.

Ist eine bestimmte R/T-Kurve RT1 oder RT2 ausgewählt worden, wird mittels der Auswahlschaltung 4 der mindestens eine dieser R/T-Kurve RT1 oder RT2 zugehörige NTC-Widerstand NTC über die Auswahlschaltung 4 an die Messaufnehmerschaltung 5 angeschlossen. Das Anschließen des NTC-Widerstand NTC kann ein Anschließen des zu der R/T-Kurve RT2 gehörigen NTC-Widerstands NTC2 oder ein zeitlich abwechselndes Anschließen der zu der R/T-Kurve RT1 gehörigen NTC-Widerstände NTC1a bis NTC1d umfassen.

Die Messaufnehmerschaltung 5 umfasst einen ohmschen Widerstand Rref mit genau bekanntem Widerstandswert, der mit dem NTC-Widerstand NTC in Reihe geschaltet ist bzw. wird. Ein Mittelabgriff Vout dieser Widerstandskette Rref, NTC ist mit einem Eingang eines A/D-Wandlers ADC verbunden. Der NTC-Widerstand NTC ist ferner mit einem Kondensator C elektrisch parallel verschaltet. Die Widerstandskette Rref, NTC und der A/D-Wandler ADC liegen an einer Spannung Vcc an, die der Betriebsspannung des A/D-Wandlers ADC entspricht. Dadurch kann die Messaufnehmerschaltung 5 einen Widerstandswert des NTC-Widerstands NTC abfühlen und als aktuellen digitalisierten Messwert R(t) an den Mikroprozessor 6 ausgeben.

Der Mikroprozessor 6 berechnet aus dem digitalisierten Messwert R(t) anhand der ausgewählten R/T-Kurve RT1 oder RT2 den aktuellen Temperaturwert T(t) und stellt ihn über das Kabel 7 dem Gargerät G1 oder G2 zur Verfügung.

**Fig.3** zeigt einen Satz 1, G1, G2 von Vorrichtungen, umfassend den Kerntemperaturfühler 1, ein Gargerät G1 in Form eines Backofens sowie ein Gargerät G2 in Form eines Grills (z.B. eines Rost-Grills, Raclette-Grills, heißen Steins, Pizzasteins, Teppanyaki, usw.).

Der Backofen G1 weist einen heizbaren Garraum 8 sowie zu seiner Steuerung eine Steuereinrichtung 9 auf. Die Steuereinrichtung 9 ist auch zur Steuerung eines Garablaufs unter Nutzung des Kerntemperaturfühlers 1 eingerichtet, z.B. programmiert. Ist der Kerntemperaturfühler 1 an den Backofen G1 angeschlossen, kann die Steuereinrichtung 9 beispielsweise die von dem Kerntemperaturfühler 1 übermittelten aktuellen Temperaturwerte T(t) dazu nutzen, sie mit einem Kerntemperatur-Sollwert zu vergleichen, der beispielsweise einen gewünschten Gargrad von in dem Garraum 8 zu garendem Gargut widerspiegelt. Ist der Kerntemperaturfühler 1 an den Backofen G1 angeschlossen, kann die Steuereinrichtung 9 den Kerntemperatur-Sollwert als den Temperatursollwert Tsoll an den Kerntemperaturfühler 1 übertragen. Da der Kerntemperatur-Sollwert in der Regel innerhalb eines Temperaturbereich von 70 °C bis 100 °C liegt und dieser Temperaturbereich z.B. dem Vorzugs-Temperaturbereiche VB1 entspricht oder in VB1 enthalten ist, wählt der Kerntemperaturfühler 1 die zugehörige R/T-Kurve RT1 aus. Der Kerntemperaturfühler 1 entspricht dann unter Nutzung nur der NTC-Widerstände NTC1a bis NTC1d funktional einem Mehrpunkt-Kerntemperaturfühler.

Der Grill G2 weist eine z.B. durch elektrische Heizelemente, Gas, usw. heizbare Garunterlage 10 auf, die eine Aufnahme 11 zur Aufnahme des Messrohrs 2 des Kerntemperaturfühlers 1 aufweist. Die Aufnahme 11 kann z.B. in Form eines Langlochs, Sacklochs oder einer anderen Führung vorliegen. Ist das Messrohr 2 in die Aufnahme 11 eingesteckt (wobei der Griff 3 als Anschlag dienen kann), kann der Kerntemperaturfühler 1 die Betriebstemperatur der heizbaren Garunterlage 10 messen. Ist der Kerntemperaturfühler 1 ferner über das Kabel 7 an den Grill G2 angeschlossen, kann der Grill G2 die Betriebstemperatur auf einen an dem Grill G2 eingestellten Betriebstemperatur-Sollwert einregeln.

Dazu weist der Grill eine Steuereinrichtung 12 auf, welche den Betriebstemperatur-Sollwert als den Temperatursollwert Tsoll auf den Kerntemperaturfühler 1 übertragen kann. Da der Betriebstemperatur-Sollwert in der Regel oberhalb von 150 °C, insbesondere oberhalb von 180 °C, liegt und damit innerhalb des Vorzugs-Temperaturbereichs VB2, der z.B. bei 150 °C beginnt, liegt, wählt der Kerntemperaturfühler 1 in diesem Fall die zugehörige R/T-Kurve RT2 aus. Der Kerntemperaturfühler 1 entspricht dann unter Nutzung nur des einen NTC-Widerstands NTC2 funktional einem Einpunkt-Temperaturfühler.

Die beiden Gargeräts G1 und G2 sind also zur Kopplung mit dem gleichen Kerntemperaturfühler 1 ausgebildet, wobei der Kerntemperaturfühler 1 jedoch unterschiedliche Funktionen ausfüllt und dazu jeweilige NTC-Widerstände NTC2 bzw. Gruppen NTC1a bis NTC1d davon nutzt. Allgemein kann der Kerntemperaturfühler 1 zur Erfüllung einer bestimmten Funktion aber auch wahlweise mehrere NTC-Widerstände mit unterschiedlichen R/T-Kurven nutzen.

Der Kerntemperatur-Sollwert kann programmgesteuert oder nutzerseitig über eine Bedienvorrichtung (hier z.B. einen Drehknebel 13 o.ä.) festgelegt werden, beispielsweise unmittelbar als Temperaturwert oder eine entsprechende Einstellung wie "durch", "medium", "heiß", "sehr heiß", eine Temperaturstufe usw.

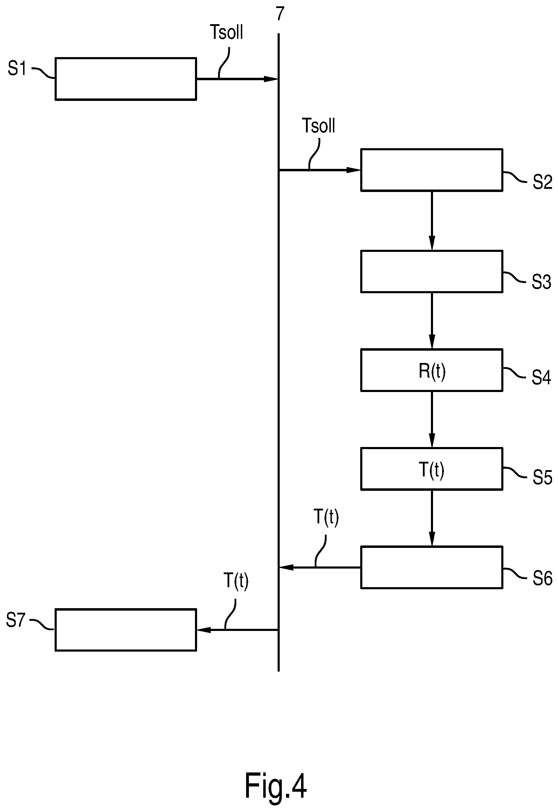

**Fig.4** zeigt einen möglichen erfindungsgemäßen Verfahrensablauf zum Betreiben des Kerntemperaturfühlers 1 bzw. eines damit gekoppelten Gargeräts G1 oder G2.

In einem Schritt S1 wird von dem Gargerät G1 oder G2 der Temperatur-Sollwert Tsoll über das Kabel 7 ausgesandt, der in einem Schritt S2 von dem Kerntemperaturfühler 1 insbesondere dessen Mikroprozessor 6, über das Kabel 7 empfangen wird.

In einem Schritt S3 wird von dem Mikroprozessor 6 anhand des Temperatur-Sollwerts Tsoll unter Verwendung eines vorgegebenen Kriteriums (z.B. einer Übereinstimmung mit einem Vorzugs-Temperaturbereich VB1, VB2) eine zugehörige R/T-Charakteristik in Form einer R/T-Kurve RT1 oder RT2 auswählt.

In einem Schritt S4 wird, z.B. von einer Messaufnehmerschaltung 5, ein aktueller Widerstandswert R(t) mindestens eines zu der ausgewählten R/T-Kurve RT1 oder RT2 gehörigen NTC-Widerstands NTC bzw. NTC1a bis NTC1d oder NTC2 ermittelt.

In einem Schritt S5 wird von dem Mikroprozessor 6 aus diesem Widerstandswert R(t) anhand der ausgewählten R/T-Kurve RT1 oder RT2 ein Temperaturwert T(t) bestimmt und in einem Schritt S6 über das Kabel 7 ausgesandt.

In einem Schritt S7 wird der Temperaturwert T(t) über das Kabel 7 von dem Gargerät G1 oder G2 empfangen und z.B. zur Überwachung auf das Erreichen einer Kerntemperatur oder zum Regeln einer Betriebstemperatur verwendet.

Die Schritte S1 bis S7 oder S3 bis S7 können in regelmäßigen Abständen wiederholt werden.

Selbstverständlich ist die vorliegende Erfindung nicht auf das gezeigte Ausführungsbeispiel beschränkt.

So können anstelle von R/T-Kurven auch Steinhart-Hart- oder Beta-Koeffizienten gespeichert sein und ein aktueller Temperaturwert T(t) über die Steinhart-Hart- oder Beta-Formel berechnet werden.

Auch können mehr als zwei R/T-Kurven mit entsprechend mehr als zwei unterschiedlichen NTC-Widerständen bzw. Gruppen davon verwendet werden.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Kerntemperaturfühler
- 2: Messrohr
- 3: Griff
- 4: Auswahlschaltung
- 5: Messaufnehmerschaltung
- 6: Mikroprozessor
- 6a: Datenspeicher
- 7: Kabel
- 8: Garraum
- 9: Steuereinrichtung
- 10: Heizbare Garunterlage
- 11: Aufnahme
- 12: Steuereinrichtung
- 13: Drehknebel
- ADC: A/D-Wandler
- C: Kondensator
- G1: Gargerät / Backofen
- G2: Gargerät / Grill
- NTC: NTC-Widerstand
- NTC1a - NTC1d: NTC-Widerstände mit R/T-Kurve RT1
- NTC2: NTC-Widerstand mit R/T-Kurve RT2
- R(t): Aktueller Widerstandswert
- Rref: Ohmscher Widerstand
- RT1: R/T-Kurve
- RT2: R/T-Kurve
- S1-S7: Verfahrensschritte
- T(t): Aktueller Temperaturwert
- Tsoll: Temperatur-Sollwert
- VB1: Vorzugs-Temperaturbereich der R/T-Kurve RT1
- VB2: Vorzugs-Temperaturbereich der R/T-Kurve RT2
- Vcc: Betriebsspannung des A/D-Wandlers ADC
- Vout: Mittelabgriff

## Patentansprüche

1. Temperaturmessvorrichtung (1), aufweisend
- einen Kerntemperaturfühler (1), der ein längliches Messrohr (2) mit mehreren NTC-Widerständen (NTC, NTC1a - NTC1d, NTC2) aufweist, wobei zumindest zwei der NTC-Widerstände (NTC1a - NTC1d, NTC2) eine zueinander unterschiedliche R/T-Charakteristik (RT1, RT2) aufweisen,
- sowie eine Datenverarbeitungsvorrichtung (6), mittels der die unterschiedlichen R/T-Charakteristiken (RT1, RT2) der NTC-Widerstände (NTC1a - NTC1d, NTC2) des Kerntemperaturfühlers (1) abrufbar sind,
wobei die Temperaturmessvorrichtung (1) dazu eingerichtet ist,
- eine R/T-Charakteristik (RT1, RT2) abhängig von einem vorgegebenen Temperatur-Sollwert (Tsoll) auszuwählen,
- Widerstandswerte (R(t)) mindestens eines zu der ausgewählten R/T-Charakteristik (RT1, RT2) gehörigen NTC-Widerstands (NTC1a - NTC1d, NTC2) zu messen und
- aus den Widerstandswerten (R(t)) und der zugehörigen ausgewählten R/T-Charakteristik (RT1, RT2) jeweilige Temperaturwerte (T(t)) zu bestimmen.

2. Temperaturmessvorrichtung (1) nach Anspruch 1, wobei der Kerntemperaturfühler (1) mindestens eine Gruppe mit jeweils mehreren NTC-Widerständen (NTC1a - NTC1d) mit pro Gruppe gleicher R/T-Charakteristik (RT1) sowie einen NTC-Widerstand (NTC2) mit dazu unterschiedlicher R/T-Charakteristik (RT2) aufweist.

3. Temperaturmessvorrichtung (1) nach einem der vorhergehenden Ansprüche, wobei der Kerntemperaturfühler (1) mindestens zwei Gruppen mit jeweils mehreren NTC-Widerständen NTC1a - NTC1d) gleicher R/T-Charakteristik (RT1) pro Gruppe aufweist.

4. Temperaturmessvorrichtung (1) einem der vorhergehenden Ansprüche, wobei mindestens ein NTC-Widerstand (NTC1a - NTC1d) mit einer ersten R/T-Charakteristik (RT1) zum Abfühlen von Temperaturen zwischen 70 °C und 100 °C vorgesehen ist und mindestens ein NTC-Widerstand (NTC2) mit einer zweiten R/T-Charakteristik (RT2) zum Abfühlen von Temperaturen über 150 °C vorgesehen ist.

5. Temperaturmessvorrichtung (1) nach einem der vorhergehenden Ansprüche, wobei mindestens ein NTC-Widerstand (NTC1a - NTC1d) ein glasgekapselter NTC-Widerstand ist.

6. Gargerät (G1, G2), aufweisend eine Steuereinrichtung (9, 12) zur Steuerung eines Garbetriebs des Gargeräts (G1, G2), wobei das Gargerät (G1, G2) eine Temperaturmessvorrichtung (1) nach einem der vorhergehenden Ansprüche aufweist und dazu eingerichtet ist, einen Temperatur-Sollwert (Tsoll) auf die Temperaturmessvorrichtung (1) zu übertragen, und wobei die Steuereinrichtung (9, 12) dazu eingerichtet ist, zur Steuerung des Garbetriebs Temperaturwerte (T(t)) von der Temperaturmessvorrichtung (1) zu empfangen.

7. Gargerät (G1, G2) nach Anspruch 6, wobei der Temperatur-Sollwertwert (Tsoll) einem nutzerseitig an dem Gargerät (G1, G2) einstellbaren Temperatur-Sollwertwert (Tsoll) entspricht.

8. Satz (G1, G2, 1) von Vorrichtungen, umfassend
- ein Gargerät (G1) nach einem der Ansprüche 6 bis 7 mit einem Garraum (8) sowie
- ein Gargerät (G2) nach einem der Ansprüche 6 bis 7 mit einer heizbaren Garunterlage (10), die eine Aufnahme (11) für das Messrohr (2) des Kerntemperaturfühlers (1) aufweist,
wobei
- die Gargeräte (G1, G2) zur Kopplung mit der gleichen Temperaturmessvorrichtung (1) ausgebildet sind,
- das Gargerät (G1) mit dem Garraum (8) dazu eingerichtet ist, von der Temperaturmessvorrichtung (1) empfangene Temperaturwerte (T(t)) zur Überwachung einer Kerntemperatur von Gargut zu nutzen und
- das Gargerät (G2) mit der heizbaren Garunterlage (10) dazu eingerichtet ist, von dem Kerntemperaturfühler (1) empfangene Temperaturwerte (T(t)) zur Regelung einer Betriebstemperatur der heizbaren Garunterlage (10) zu nutzen.

9. Verfahren zum Betreiben (1) eines Gargeräts nach einem der Ansprüche 6 bis 7, bei dem
- von dem Gargerät (G1, G2) ein Temperatur-Sollwert (Tsoll) an die Temperaturmessvorrichtung (1) übermittelt wird (S1, S2) und
die Temperaturmessvorrichtung (1)
- anhand des Temperatur-Sollwerts (Tsoll) eine zugehörige R/T-Charakteristik (RT1, RT2) auswählt (S3),
- Widerstandswerte (R(t)) mindestens eines zu der ausgewählten R/T-Charakteristik (RT1, RT2) gehörigen NTC-Widerstands (NTC, NTC1a - NTC1d, NTC2) abfühlt (S4),
- aus diesen Widerstandswerten (R(t)) anhand der zugehörigen R/T-Charakteristik (RT1, RT2) jeweilige Temperaturwerte (T(t)) bestimmt (S5) und
- die Temperaturwerte (T(t)) an das Gargerät (G1, G2) übermittelt (S6, S7).

## Claims

1. Temperature measurement apparatus (1), having
- a core temperature sensor (1), which has an elongate measurement tube (2) with multiple NTC resistors (NTC, NTC1a - NTC1d, NTC2), wherein at least two of the NTC resistors (NTC1a - NTC1d, NTC2) have a different R/T characteristic (RT1, RT2) from one another,
- as well as a data processing apparatus (6), by means of which the different R/T characteristics (RT1, RT2) of the NTC resistors (NTC1a - NTC1d, NTC2) of the core temperature sensor (1) can be retrieved,
wherein the temperature measurement apparatus (1) is configured
- to select an R/T characteristic (RT1, RT2) as a function of a predefined temperature setpoint value (Tsetpoint),
- to measure resistance values (R(t)) of at least one NTC resistor (NTC1a - NTC1d, NTC2) associated with the selected R/T characteristic (RT1, RT2) and
- to determine respective temperature values (T(t)) from the resistance values (R(t)) and the associated selected R/T characteristic (RT1, RT2).

2. Temperature measurement apparatus (1) according to claim 1, wherein the core temperature sensor (1) has at least one group with multiple NTC resistors (NTC1a - NTC1d) in each case with R/T characteristic (RT1) that is the same per group as well as an NTC resistor (NTC2) with R/T characteristic (RT2) that is different therefrom.

3. Temperature measurement apparatus (1) according to one of the preceding claims, wherein the core temperature sensor (1) has at least two groups, each with multiple NTC resistors (NTC1a - NTC1d) with the same R/T characteristic (RT1) per group.

4. Temperature measurement apparatus (1) according to one of the preceding claims, wherein at least one NTC resistor (NTC1a - NTC1d) with a first R/T characteristic (RT1) is provided for sensing temperatures between 70 °C and 100 °C and at least one NTC resistor (NTC2) with a second R/T characteristic (RT2) is provided for sensing temperatures above 150 °C.

5. Temperature measurement apparatus (1) according to one of the preceding claims, wherein at least one NTC resistor (NTC1a - NTC1d) is a glass-encapsulated NTC resistor.

6. Cooking appliance (G1, G2), having a control facility (9, 12) for controlling a cooking operation of the cooking appliance (G1, G2), wherein the cooking appliance (G1, G2) has a temperature measurement apparatus (1) according to one of the preceding claims and is configured to transfer a temperature setpoint value (Tsetpoint) to the temperature measurement apparatus (1), and wherein the control facility (9, 12) is configured to receive temperature values (T(t)) from the temperature measurement apparatus (1) in order to control the cooking operation.

7. Cooking appliance (G1, G2) according to claim 6, wherein the temperature setpoint value (Tsetpoint) corresponds to a temperature setpoint value (Tsetpoint) that can be set by the user on the cooking appliance (G1, G2).

8. Set (G1, G2, 1) of apparatuses, comprising
- a cooking appliance (G1) according to at least one of claims 6 to 7 with a cooking compartment (8) as well as
- a cooking appliance (G2) according to one of claims 6 to 7 with a heatable cooking base (10), which has a receptacle (11) for the measuring tube (2) of the core temperature sensor (1),
wherein
- the cooking appliances (G1, G2) are embodied for coupling to the same temperature measurement apparatus (1),
- the cooking appliance (G1) with the cooking compartment (8) is configured to use temperature values (T(t)) received from the temperature measurement apparatus (1) to monitor a core temperature of food to be cooked, and
- the cooking appliance (G2) with the heatable cooking base (10) is configured to use temperature values (T(t)) received from the core temperature sensor (1) to regulate an operating temperature of the heatable cooking base (10).

9. Method for operating (1) a cooking appliance according to one of claims 6 to 7, in which
- a temperature setpoint value (Tsetpoint) is transmitted (S1, S2) from the cooking appliance (G1, G2) to the temperature measurement apparatus (1) and the temperature measurement apparatus (1),
- on the basis of the temperature setpoint value (Tsetpoint), selects (S3) an associated R/T characteristic (RT1, RT2),
- senses (S4) resistance values (R(t)) of at least one NTC resistor (NTC, NTC1a - NTC1d, NTC2) associated with the selected R/T characteristic (RT1, RT2),
- determines (S5) respective temperature values (T(t)) from said resistance values (R(t)) on the basis of the associated R/T characteristic (RT1, RT2) and
- transmits (S6, S7) the temperature values (T(t)) to the cooking appliance (G1, G2).

## Revendications

1. Dispositif de mesure de température (1), présentant :
- un capteur de température interne (1) qui présente un tube de mesure longitudinal (2) avec plusieurs résistances à CTN (CTN, CTN1a à CTN1d, CTN2), dans lequel au moins deux des résistances à CTN (CTN1a à CTN1d, CTN2) présentent une caractéristique R/T différente l'une de l'autre (RT1, RT2),
- ainsi qu'un dispositif de traitement des données (6) au moyen duquel les différentes caractéristiques R/T (RT1, RT2) des résistances à CTN (CTN1a à CTN1d, CTN2) du capteur de température interne (1) peuvent être extraites,
- dans lequel le dispositif de mesure de température (1) est conçu
- pour sélectionner une caractéristique R/T (RT1, RT2) en fonction d'une valeur de consigne de température prédéfinie (Tsoll),
- pour mesurer des valeurs de résistance (R(t)) d'au moins une résistance à CTN (CTN1a à CTN1d, CTN2) appartenant à la caractéristique R/T (RT1, RT2) sélectionnée et
- pour déterminer des valeurs respectives de température (T(t)) à partir des valeurs de résistance (R(t)) et de la caractéristique R/T (RT1, RT2) sélectionnée correspondante.

2. Dispositif de mesure de température (1) selon la revendication 1, dans lequel le capteur de température interne (1) présente au moins un groupe avec à chaque fois plusieurs résistances à CTN (CTN1a - CTN1d) avec par groupe une caractéristique R/T similaire (RT1) ainsi qu'une résistance à CTN (CTN2) avec une caractéristique R/T différente (RT2).

3. Dispositif de mesure de température (1) selon l'une des revendications précédentes, dans lequel le capteur de température interne (1) présente au moins deux groupes avec à chaque fois plusieurs résistances à CTN (CTN1a - CTN1d) de caractéristique R/T similaire (RT1) par groupe.

4. Dispositif de mesure de température (1) selon l'une des revendications précédentes, dans lequel au moins une résistance à CTN (CTN1a - CTN1d) est dotée d'une première caractéristique R/T (RT1) pour détecter des températures entre 70° C et 100° C et au moins une résistance à CTN (CTN2) est prévue avec une deuxième caractéristique R/T (RT2) pour détecter des températures supérieures à 150° C.

5. Dispositif de mesure de température (1) selon l'une des revendications précédentes, dans lequel au moins une résistance à CTN (CTN1a - CTN1d) est une résistance à CTN encapsulée en verre.

6. Appareil de cuisson (G1, G2) présentant un dispositif de commande (9, 12) pour commander un fonctionnement de cuisson de l'appareil de cuisson (G1, G2), dans lequel l'appareil de cuisson (G1, G2) présente un dispositif de mesure de température (1) selon l'une des revendications précédentes et est conçu pour transmettre une valeur de consigne de température (Tsoll) au dispositif de mesure de température (1), et dans lequel le dispositif de commande (9, 12) est conçu pour recevoir des valeurs de température (T(t)) du dispositif de mesure de température (1) pour la commande du fonctionnement de cuisson.

7. Appareil de cuisson (G1, G2) selon la revendication 6, dans lequel la valeur de consigne de température (Tsoll) correspond à une valeur de consigne de température (Tsoll) réglable côté utilisateur sur l'appareil de cuisson (G1, G2).

8. Ensemble (G1, G2, 1) de dispositifs, comprenant
- un appareil de cuisson (G1) selon l'une des revendications 6 à 7 avec un espace de cuisson (8) ainsi
- qu'un appareil de cuisson (G2) selon l'une des revendications 6 à 7 avec un support de cuisson chauffant (10) qui présente un logement (11) pour le tube de mesure (2) du capteur de température interne (1),
dans lequel
- les appareils de cuisson (G1, G2) sont conçus pour le couplage au même dispositif de mesure de température (1),
- l'appareil de cuisson (G1) avec l'espace de cuisson (8) est conçu pour utiliser des valeurs de températures (T(t)) reçues du dispositif de mesure de température (1) pour la surveillance d'une température interne d'un produit à cuire et
- l'appareil de cuisson (G2) avec le support de cuisson chauffant (10) est conçu pour utiliser des valeurs de température (T(t)) reçues par le capteur de température interne (1) pour la régulation d'une température de fonctionnement du support de cuisson chauffant (10).

9. Procédé de fonctionnement (1) d'un appareil de cuisson selon l'une des revendications 6 à 7, dans lequel
- une température de consigne de température (Tsoll) est transmise (S1, S2) au dispositif de mesure de température (1) par l'appareil de cuisson (G1, G2) et le dispositif de mesure de température (1),
- sélectionne (S3) à l'aide de la valeur de consigne de température (Tsoll) une caractéristique R/T (RT1, RT2) correspondante,
- détecte (S4) des valeurs de résistance (R(t)) d'au moins une résistance à CTN (CTN, CTN1a à CTN1d, CTN2) appartenant à la caractéristique R/T (RT1, RT2) sélectionnée,
- détermine (S5) à partir de ces valeurs de résistance (R(t)) des valeurs de température respectives (T(t)) à l'aide de la caractéristique R/T (RT1, RT2) correspondante et
- transmet (S6, S7) les valeurs de température (T(t)) à l'appareil de cuisson (G1, G2).
